Europäisches Patentamt

European Patent Office

Office européen des brevets

(11) Veröffentlichungsnummer: **0 502 251 A2**

# EUROPÄISCHE PATENTANMELDUNG

(21) Anmeldenummer: **91120860.1**

(22) Anmeldetag: **04.12.91**

(51) Int. Cl.5: **H04L 25/64**

(30) Priorität: **05.03.91 DE 4107015**

(43) Veröffentlichungstag der Anmeldung:
**09.09.92 Patentblatt 92/37**

(84) Benannte Vertragsstaaten:
**AT BE CH DE DK ES FR GB GR IT LI NL SE**

(71) Anmelder: **RICHARD HIRSCHMANN GmbH & CO.**
**Obertürkheimer Strasse 78**
**W-7300 Esslingen(DE)**

(72) Erfinder: **Schenkyr, Rainer, Dipl.-Ing.**
**Steingaustrasse 20**
**W-7311 Schlierbach(DE)**
Erfinder: **Schmid, Bernhard, Dipl.-Ing.**
**Römerstrasse 15**
**W-7316 Köngen(DE)**

(74) Vertreter: **Geyer, Ulrich F. et al**
**Wagner & Geyer Patentanwälte**
**Gewürzmühlstrasse 5**
**W-8000 München 22(DE)**

(54) **Verfahren zum Zwischenverstärken von digitalen Signalen sowie Zwischenverstärker für digitale Signale.**

(57) Bei einem Verfahren zum Zwischenverstärken von digitalen Signalen mit einer eine Zwischenspeicherung der digitalen Signale umfassenden Amplituden- und Taktregeneration und einem Ausgleich der durch die Taktableitung auftretenden Längenverluste der Präambel werden zur Verhinderung sich schrittweise verkürzender Datenpaketpausen zwischen aufeinanderfolgenden Datenpaketen diese Datenpaketpausen überprüft und der Beginn der Aussendung des nachfolgenden Datenpakets verzögert, wenn eine verkürzte Datenpaketpause festgestellt wird. Auf diese Weise ist es möglich, ohne nachteilige Auswirkungen auf die Sicherheit eines Netzwerkes mehr Zwischenverstärker zu kaskadieren und damit größere Netzwerke zu schaffen.

EP 0 502 251 A2

Die Erfindung betrifft ein Verfahren zum Zwischenverstärken von digitalen Signalen mit einer eine Zwischenspeicherung der digitalen Signale umfassenden Amplituden- und Taktregeneration sowie einem Ausgleich der durch die Taktableitung auftretenden Längenverluste der Präambel. Die Erfindung betrifft weiterhin einen Zwischenverstärker für digitale Signale mit einer Amplituden- und Taktregenerationsschaltung sowie einem Präambelgenerator.

Ein Zwischenverstärker dieser Art ist beispielsweise als elektronischer Baustein T7200 Multi-Port Repeater Unit Controller der Firma AT&T bekannt und im Datenblatt zu diesem elektronischen Baustein beschrieben. Dieser bekannte Zwischenverstärker ist für das CSMA//CD - (Carrier Sense Multiple Access/Collision Detection) - Zugriffsverfahren gemäß der IEEE 802.3-Norm vorgesehen und erfüllt die diesem Verfahren bzw. dieser Norm entsprechenden Bedingungen. Das CSMA/CD-Verfahren wird insbesondere im Zusammenhang mit Rechnernetzwerken eingesetzt.

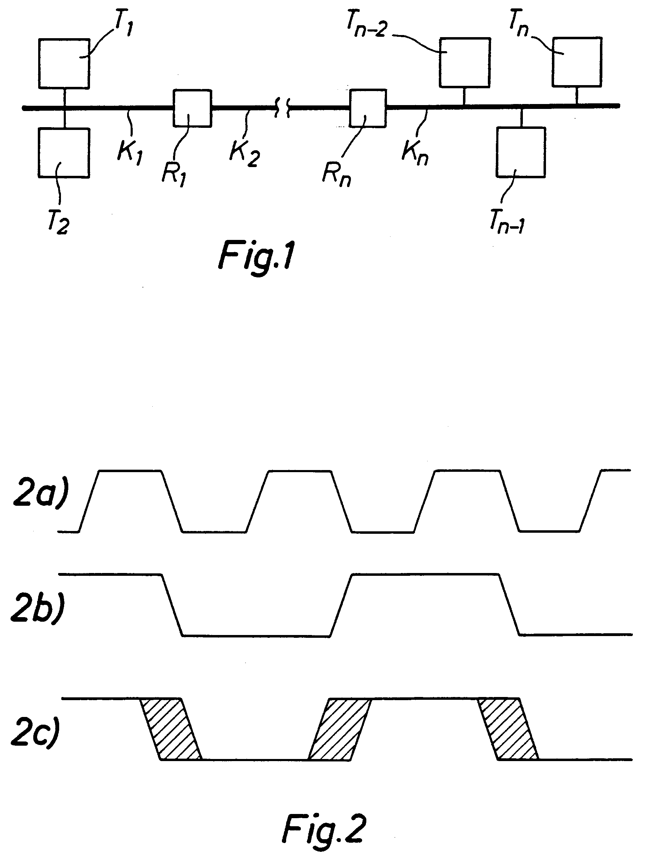

In Fig. 1 ist der prinzipielle Aufbau am Beispiel eines CSMA/CD-Rechnernetzes schematisch dargestellt, welches in den letzten Jahren weite Verbreitung gefunden hat. Rechner $T_i$ sind über Übertragungskanäle, sogenannte Segmente $K_i$, miteinandesr verbunden. Zwischen den einzelnen Segmenten befinden sich jeweils ein Zwischenverstärker $R_i$, im englischen Sprachgebrauch auch Repeater genannt, der die Aufgabe hat, die über die Übertragungskanäle $K_i$ übertragenen digitalen Signale sowohl hinsichtlich ihrer Amplituden als auch hinsichtlich ihres Übertragungstaktes zu regenerieren. Die Amplitudenregeneration ist erforderlich, da die digitalen Datensignale während der Übertragung in den Übertragungskanälen in ihrer Amplitude abgeschwächt wird.

Ein Zwischenverstärker weist im wesentlichen folgende Grundfunktionen auf:
a) Das Erkennen und das Abtrennen der Datenpakete von eventuellen Leitungsprüfsignalen;
b) die Amplitudenregeneration;
c) die Taktregeneration;
d) die Rahmenregeneration und
e) das Aussenden der Datenpakete mit eventuellen Datenprüfsignalen.

Für das Erkennen und das Abtrennen der Datenpakete von eventuellen Leitungsprüfsignalen und für die Amplitudenregeneration weist der Zwischenverstärker einen Empfänger auf, welcher eine auf das Übertragungsmedium, z. B. Lichtwellenleiter (LWL)-Kabel oder Koaxialkabel, angepaßten Aufbau besitzt. Die Aufgabe dieses Empfängers ist das Erkennen des Datenpaket-Anfangs, die Verstärkung, also die Amplitudenregeneration der eigentlichen Daten des Informationspakets und das Abtrennen der eventuellen Leitungsprüfsignale.

Durch die begrenzte Übertragungsbandbreite und durch Störungen ist der effektive Zeitpunkt des Datenpaketanfangs nicht immer exakt feststellbar. Das bedeutet, daß die ersten Bits eines Datenpakets im Empfänger verloren gehen können. Dies ist insbesondere dann der Fall, wenn in den Paketpausen ein Prüfsignal zur Leitungsüberwachung übertragen wird, das asynchron zu den Daten ist.

Anhand von Fig. 2 wird nachfolgend erläutert, weshalb eine Taktregeneration erforderlich ist. Fig. 2a gibt das Sendetaktsignal wieder, während Fig. 2b das Sendedatensignal am Eingang eines Übertragungskanals $K_i$ bzw. am Ausgang eines Zwischenverstärkers $R_i$ stehen die Sendedaten in einem festen zeitlichen Bezug zum Sendetaktsignal. Bei der Übertragung des Datensignals über einen Übertragungskanal $K_i$ geht dieser korrekte, feste zeitliche Bezug des Datensignals zum Sendetaktsignal verloren. Gründe hierfür sind die begrenzte Übertragungsbandbreite der Übertragungskanäle $K_i$, Störsignale, zeitlich veränderliche Entscheidungsschwellen der Eingangsschaltungen der Zwischenverstärker $R_i$ usw.

Anhand eines sog. NRZ - (Non Return to Zero) -Signals ist dieser Vorgang in Fig. 2c dargestellt, wobei hier bereits die Amplitudenregeneration vorgenommen wurde. Auch sei der durch die Laufzeit des Datensignals im Übertragungskanal $K_i$ verursachte Phasenversatz zwischen den Daten am Eingang und am Ausgang eines Übertragungskanals $K_i$ nicht berücksichtigt. Wegen des Verlusts des korrekten zeitlichen Bezugs zwischen dem Sendetaktsignal und dem Datensignal ergibt sich der in Fig. 2a dargestellte schraffierte Bereich mit nicht definierter Phase. Dieses Phasenzittern, im englischen Sprachgebrauch auch Jitter genannt, verändert die spektralen Eigenschaften des Datensignals und muß daher ausreichend klein gehalten werden, um eine fehlerfreie Taktableitung durch den Empfänger und damit eine korrekte, fehlerfreie Interpretation des Datensignals in der Empfangsschaltung zu ermöglichen. Die Taktregeneration im Zwischenverstärker $R_i$ hat daher die Aufgabe, das Datensignal phasenzitterfrei wieder auszusenden.

Da am Anfang eines Datenpakets Bits durch die Abtrennung eventueller Leitungsprüfsignale verloren gehen können, sind - wie dies im weiteren noch im einzelnen beschrieben werden wird - diese verloren gegangenen Bits in einer Schaltungsstufe zur Rahmengeneration anzufügen.

Schließlich ist es Aufgabe des Zwischenverstärkers, die empfangenen, amplitudenverstärkten und im Rahmengenerator restaurierten Datenpakete mit einem zitterfreien Sendetakt in einen neuen Übertragungskanal $K_{i+l}$ auszusenden.

Nachfolgend werden Eigenschaften und Parameter des CSMA/CD-Übertragungsverfahrens nach der IEEE 802.3-Norm beschrieben, die auch für die

Zwischenverstärker $R_i$ gelten bzw. denen auch die Zwischenverstärker $R_i$ entsprechen sollten.

Eine der Eigenschaften des CSMA/CD-Zugriffsverfahrens besteht darin, daß die zu übertragenden Daten in einzelne Pakete unterteilt werden, die einen Steuerinformations- und Nutzdatenteil sowie eine diesem Steuerinformations- und Nutzdatenteil vorgeschaltete Präambel aufweisen.

Die Präambel besteht aus einem regelmäßigen, informationslosen Datenmuster, das es den Empfängern, d. h. den Teilnehmern oder Rechnern $T_i$, sowie den Zwischenverstärkern ermöglicht, sich auf ein empfangenes Datenpaket aufzusynchronisieren. Die Mindestlänge der Präambel ist vorgeschrieben und beträgt bei dem besagten Zugriffsverfahren nach der erwähnten Norm 56 Bits.

Der Steuerinformations- und Nutzdatenteil enthält Steuerinformation sowie die eigentlichen Nutzdaten. Die Minimal- und die Maximallänge dieses Steuerinformation- und Nutzdatenteils sind ebenfalls vorgeschrieben und betragen im hier besprochenen Verfahren 512 Bits als Minimallänge und 12 144 Bits als Maximallänge.

Weiterhin ist der minimale zeitliche Abstand, mit dem die Datenpakete im Netzwerk gesendet werden dürfen, vorgeschrieben. Dieser Abstand, der auch als Paketabstand oder Inter Frame Gap (IFG) bezeichnet wird, beträgt bei dem hier besprochenen Verfahren 9,6 $\mu$s. Der minimale zeitliche Abstand gibt den Teilnehmern bzw. den Rechnern $T_i$ die Möglichkeit, sich nach Ende eines Datenpakets auf den Empfang des nächsten vorzubereiten.

Weiterhin ist die maximale Laufzeit eines Datenpakets zwischen den beiden am weitesten voneinander entfernten Teilnehmern bzw. Rechnern $T_i$ im Netzwerk vorgeschrieben. Dies ist zur Feststellung eines Mehrfach-Zugriffs von zwei oder mehr Teilnehmern innerhalb einer definierten Zeit nach Sendebeginn erforderlich. Bei dem hier besprochenen Verfahren beträgt diese maximale Laufzeit 25,6 $\mu$s. Bei gegebener Ausbreitungsgeschwindigkeit der Signale in den Übertragungskanälen $K_i$ ist die maximale räumliche Ausdehnung des Netzwerks bei bekannter Laufzeitverzögerung und bekannter Anzahl der Zwischenverstärker $K_i$, d.h. der maximalen räumlichen Ausdehnung des Netzes, festgelegt. Beim CSMA/CD-Zugriffsverfahren nach der genannten Norm beträgt diese maximale räumliche Ausdehnung für Koaxial-Kabel ca. 2,5 km und für Lichtwellenleiter (LWL)-Kabel höchstens 5 km.

Aus den zuvor erläuterten Eigenschaften, nämlich der Struktur des Datenpakets, dem minimalen zeitlichen Abstand zwischen den Datenpaketen und der maximalen Laufzeit eines Datenpakets im Netzwerk ergeben sich die nachfolgenden Forderungen an die Taktregeneration eines Zwischenverstärkers $R_i$ in einem CSMA/CD-Netzwerk nach der IEEE 802.3-Norm.

Würde sich die Länge der Präambel beim Durchlauf eines Datenpakets durch einen Zwischenverstärker verkürzen, würde dies bedeuten, daß bei der Verwendung mehrerer hintereinander geschalteter Zwischenverstärker die Präambel sukzessive immer weiter verkürzt werden würde, bis schließlich das Aufsynchronisieren eines Teilnehmers oder eines weiteren Zwischenverstärkers auf das Datenpaket nicht mehr möglich ist. Es besteht daher die Forderung, daß die Länge der Präambel beim Durchlauf eines Datenpakets durch einen Zwischenverstärker nicht verkürzt wird, wobei jedoch eine mögliche Verlängerung der Präambel zulässig ist.

Wenn der zeitliche Abstand bzw. die Pause zwischen zwei aufeinanderfolgenden Datenpaketen, - beispielsweise 9,6 $\mu$s -, bei Einsatz eines Zwischenverstärkers über einen Minimalwert hinaus verkürzt werden würde, würde dies bedeuten, daß die Paketabstände bei der Kaskadierung mehrerer Zwischenverstärker schrittweise immer weiter verkürzt würden, wodurch die Anzahl der hintereinander zu schaltender Zwischenverstärker begrenzt wäre. Bei Verwendung von Zwischenverstärkern in den Netzwerken muß daher gefordert werden, daß der minimale zeitliche Abstand (min. interframe gap) zwischen zwei aufeinanderfolgenden Datenpaketen durch einen Zwischenverstärker nicht bzw. nur minimal verkürzt werden darf.

Eine weitere Forderung an einen Zwischenverstärker besteht darin, daß die Einschaltverzögerung, im englischen Sprachgebrauch mit Start-Up-Delay bezeichnet, möglichst klein sein soll, wie im weiteren noch erläutert werden wird. Die Einschaltverzögerung ist die Zeit, die zwischen dem Empfang des ersten Präambelbits eines Datenpakets und dem Wiederaussenden des ersten Präambelbits des im Zwischenverstärker amplituden- und/oder taktregenerierten Datenpakets verstreicht. Die Einschaltverzögerung erhöht die Laufzeit eines Datenpakets innerhalb des Netzwerkes und verringert damit dessen maximale räumliche Ausdehnung; oder anders ausgedrückt, bei gegebener räumlicher Ausdehnung eines Netzwerkes ist die Anzahl der kaskadierbaren Zwischenverstärker begrenzt.

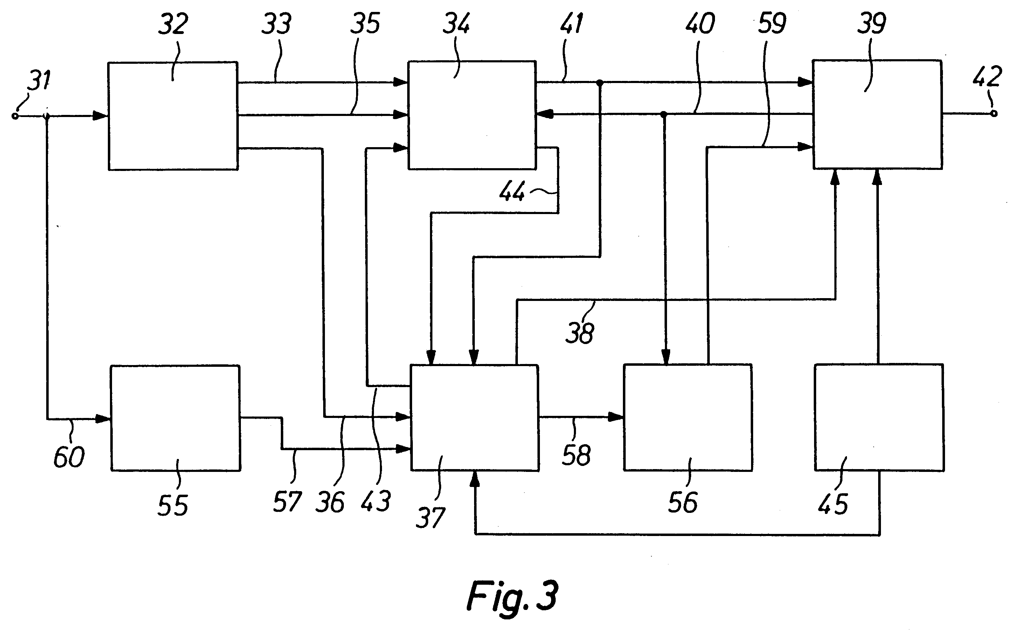

In Fig. 3 ist die Grundstruktur einer herkömmlichen Schaltungsanordnung für die Taktregeneration in einem Zwischenverstärker wiedergegeben.

Am Eingang 31 der Taktregenerationsschaltung liegt das Empfangsdatensignal an, das an eine Taktableitungs- und Decodierungsstufe 32 gelangt. Die Taktableitungs- und Decodierungsstufe 32 leitet ein Empfangstaktsignal aus dem Empfangdatensignal ab, wandelt das codierte Empfangdatensignal, welches im Falle eines Netzwerks nach der IEEE 802.3-Norm manchestercodiert ist, in das NRZ-Format um. Das NRZ-Datensignal gelangt über eine Leitung 33 an den Eingang eines Pufferspeichers 34. Das Empfangstaktsignal gelangt über eine Leitung 35 als Einlesetaktsignal an den Einlese-Taktsignaleingang des Pufferspeichers 34.

Die Taktsignalableitung aus dem Empfangsdatensignal erfolgt in der Taktableitungs- und Decodierungsstufe 32 üblicherweise mittels eines Phasenregelkreises, im englichen Sprachgebrauch auch als Phase Lock Loop (PLL) bekannt, mit dem ein lokaler Oszillator mit der Präambel des Emp- fangsdatensignals synchronisiert wird. Nach Ab- schluß des Synchronisierungsvorgangs wird ein sog. RX-Carrier-Signal erzeugt, das über die Leitung 36 an eine Steuerschaltung 37 gelangt.

Über eine Leitung 38 gelangt ein Auslese-Freigabesignal an einen Codierer 39, der dem Pufferspeicher 34 ein Sendetaktsignal als Auslesetaktsignal über die Leitung 40 bereitstellt, so daß dementsprechend die NRZ-codierten Daten über die Leitung 41 aus dem Pufferspeicher 34 ausgelesen und im Codierer 39 in manchestercodierte Daten umgesetzt werden, so daß am Ausgang 42 ein Sendedatensignal bereitgestellt wird. Da die Daten des Sendedatensignals in einem festen zeitlichen Bezug zum Auslese- bzw. Sendetaktsignal stehen, ist das Sendedatensignal frei von Phasenzittern.

Die Steuerschaltung 37 gibt über die Leitung 43 ein Einlese-Freigabesignal an den Pufferspeicher 34 ab. Über eine Leitung 44 erhält die Steuerschaltung 37 ein sog. DOR-Signal zugeleitet, das anzeigt, wenn der Pufferspeicher 34 vollständig ausgelesen ist. Ein Sendetaktgenerator 45 stellt sowohl der Steuerschaltung 37 als auch dem Codierer 39 das Sendetaktsignal bereit.

Der Pufferspeicher 34 ist vorzugsweise entsprechend dem FIFO-Prinzip (First In, First Out) realisiert und ermöglicht ein unabhängiges, asynchrones Ein- und Auslesen von Daten. Das Einlesen der an der Leitung 33 auftretenden Empfangsdatensignale in den Pufferspeicher 34 erfolgt synchron zum Empfangstaktsignal, das an der Leitung 35 anliegt. Das Auslesen der Daten aus dem Pufferspeicher 34 erfolgt synchron zum an der Leitung 40 anliegenden Auslesetaktsignal, das gleich dem lokalen Sendetaktsignal ist. Das Sendetaktsignal ist zum Empfangstaktsignal asynchron.

Die Anzahl der Bits, die im Pufferspeicher 34 zwischengespeichert werden müssen, hängt von der Frequenzdifferenz zwischen dem Sende- und Empfangstaktsignal und der maximalen Länge des Datenpakets ab. Am Beispiel der Spezifikationen nach der IEEE 802.3-Norm wird dies nachfolgend zahlenmäßig veranschaulicht.

Gemäß dem CSMA/CD-Verfahren nach der besagten Norm beträgt die Bitrate $1 \times 10^7$ Bits/s bei einer maximalen Abweichung von +/- 0,01 %, d. h. von +/- $1 \times 10^3$ Bits/s. Ohne die Präambel beträgt die maximale Paketlänge 12 144 Bits.

Bei minimaler Bitrate ergibt sich aus den genannten Daten eine maximale Länge der Paketdauer von L1 = 1,214521 ms.

Bei maximaler Bitrate beträgt die Paketdauer maximaler Länge L2 = 1,214279 ms.

Der Unterschied zwischen L1 und L2 beträgt also 242 ns. Da bei einer Bitrate von $1 \times 10^7$ Bit/s die Bitzeit 100 ns lang ist, entspricht dieser Zeitunterschied von 242 ns ungefähr 2,5 Bitzeiten. Das bedeutet, daß mindestens 3 Bits zwischengespeichert werden müssen. Wird nämlich mit minimal zulässiger Bitrate ein- und maximal zulässiger Bitrate ausgelesen, also schneller aus- als eingelesen, muß der Pufferspeicher vor Beginn des Auslesens durch den Codierer mindestens 3 Bits enthalten, damit sichergestellt ist, daß bei jedem Auslesetakt auch mindestens ein Bit im Pufferspeicher vorhanden ist.

Wird dagegen mit maximaler Bitrate eingelesen und mit minimaler Bitrate ausgelesen, müssen zusätzlich drei weitere Bits zwischengespeichert werden. Die minimale Pufferspeicherkapazität, auch minimale Tiefe des Pufferspeichers genannt, muß deshalb mindestens 6 Bits betragen.

Die hier ermittelten Zahlen stellen theoretische Minimalwerte dar, bei denen insbesondere vorausgesetzt ist, daß die Bitraten innerhalb der spezifizierten Toleranzgrenzen liegen. Bei kommerziell eingesetzten Zwischenverstärkern werden üblicherweise mehr als 3 Bits zwischengespeichert, um die Empfindlichkeit gegenüber Schwankungen der Bitraten zu reduzieren und damit die Betriebssicherheit zu erhöhen.

Die Anzahl der zwischengespeicherten Bits bestimmt im wesentlichen die statische Laufzeit einer Taktgenerationsschaltung. Die statische Laufzeit ist die Zeit zwischen dem Empfang und der Wiederaussendung ein und desselben Bits durch einen Zwischenverstärker. Um Verwechslungen zu vermeiden, sei darauf hingewiesen, daß der Begriff der statischen Laufzeit nicht zu verwechseln ist mit der bereits früher erläuterten Einschaltverzögerung, die als Zeit zwischen dem Empfang des ersten Präambelbits eines Datenpakets und dem Wiederaussenden des ersten Präambilbits des amplituden- und taktregenerierten Datenpakets definiert ist.

Werden n Bits zwischengespeichert und stimmen der Sende- und Empfangstakt überein, ist die statische Laufzeit größer oder gleich n Bitzeiten.

Die Steuerschaltung 37 steuert den Pufferspeicher 34 und den Codierer 39 über die Leitung 43 bzw. 38.

Ist der bereits erwähnte Synchronisierungsvorgang in der Taktableitungs- und Decodierungsstufe 32 beendet und stehen am Ausgang dieser Stufe 32 das Empfangdatensignal und das Empfangstaktsignal zur Verfügung, wird dies über die Leitung 36

mit dem $R_x$-Carrier-Signal der Steuerschaltung 37 mitgeteilt, die in Abhängigkeit davon das Einlesen in den Pufferspeicher über die Leitung 43 freigibt. Ist im Puffer eine ausreichende Anzahl an Daten gespeichert, um bei maximaler unterschiedlicher Einlese- und Auslesegeschwindigkeit für den Auslesevorgang immer wenigstens ein Bit zur Verfügung zu haben, wird das Auslesen durch den Codierer 39 freigegeben.

Bei Datenpaketende, das der Steuerschaltung 37 durch das $R_x$-Carrier-Signal über die Leitung 36 angezeigt wird, sperrt die Steuerschaltung 37 über die Leitung 43 das Einlesen weiterer Bits in den Pufferspeicher 34. Nachdem daraufhin der Pufferspeicher 34 vollständig ausgelesen ist, was der Steuerschaltung 37 über die Leitung 44 mittels des DOR-Signals angezeigt wird, sperrt die Steuerschaltung 37 das Auslesen des Pufferspeichers 34 durch den Codierer 39 über die Leitung 38. Die Übertragung eines Datenpakets ist damit abgeschlossen.

Die Funktionsgruppe Taktableitungs- und Decodierungsstufe 32 und Codierer 39 sind beispielsweise als elektronischer Baustein AM7992B der Firma Advanced Micro Devices (AMD) bekannt und in entsprechenden Datenblättern dieser Firma beschrieben. Die Steuereinheit 37 für einen derartigen Zwischenverstärker wird von der Firma AT&T Microelectronics GmbH in Gestalt des elektronischen Bausteins T7200 Multi-Port Repeater Unit Controller angeboten und ist in einem entsprechenden Datenblatt beschrieben. Mit diesem Baustein werden mindestens 7 Bits zwischengespeichert. Ein Beispiel für einen Pufferspeicher 34 ist der elektronische Baustein 74HCT40105 der Firma Valvo GmbH, der ebenfalls in einem entsprechenden Datenblatt dieser Firma beschrieben ist. Der Sendetaktgenerator 45 bzw. dessen Oszillator muß hinsichtlich seiner Frequenzgenauigkeit den Anforderungen der gewählten Norm entsprechen.

Weiterhin ist zusätzlich eine Trägererkennungsstufe 55 und eine Stufe 56 zur Erzeugung einer synthetischen Präambel, nachfolgend kurz Präambelgenerator genannt, vorgesehen. Der Eingang der Trägererkennungsstufe 55 ist mit dem Eingang 31 der Taktregenerationsschaltung über eine Leitung 60 verbunden, so daß die Trägererkennungsstufe 55 in der Lage ist, den Beginn einer Präambel eines einlaufenden Datenpakets zu erkennen. Diese Information wird der Steuerschaltung 37 über die Datenleitung 57 mit dem Signal "Daten vorhanden" zugeleitet. Über eine Leitung 58 ist die Steuerschaltung 37 mit dem Präambelgenerator 56 verbunden, dessen Ausgangssignal über die Leitung 59 an den Codierer 39 gelangt. Der Präambelgenerator 56 erhält weiterhin das auf der Leitung 40 anliegende Auslesetaktsignal, das gleichzeitig das Sendetaktsignal ist, zugeleitet.

Die Trägererkennungsstufe 55 ist so ausgebildet, daß die zeitliche Verzögerung zwischen dem Beginn der an ihrem Eingang auftretenden Präambel und der Meldung an die Steuerschaltung 37 sehr klein, vorzugsweise kleiner als eine Bitzeit ist. Die Steuerschaltung 37 ist daher bereits vor dem Ende des Synchronisierungsvorgangs in der Taktableitungs- und Decodierungsstufe 32 darüber unterrichtet, daß ein Datenpaket an der Taktregenerationsschaltung anliegt.

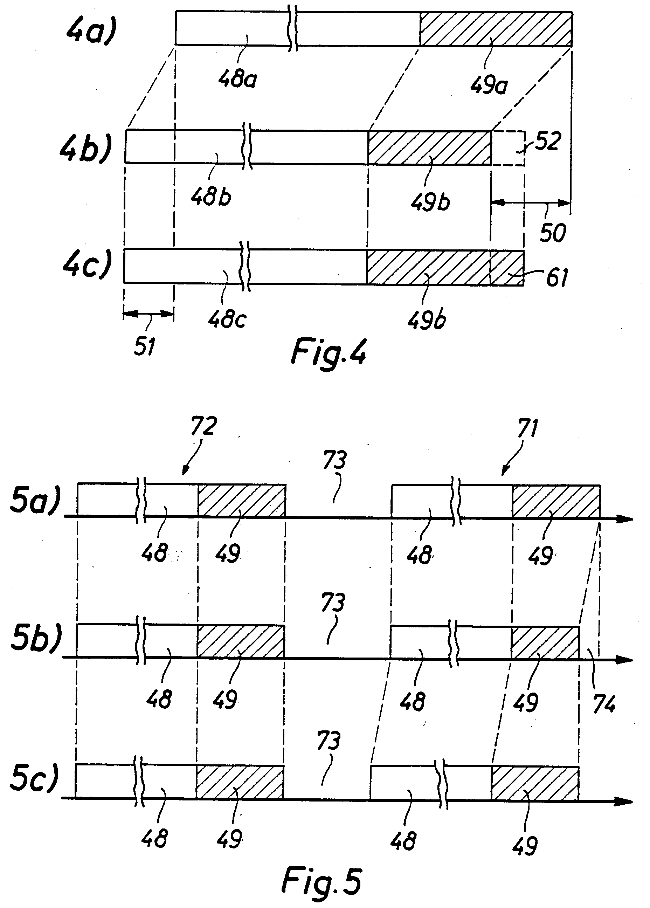

Anhand von Fig. 4 werden nachfolgend die Veränderungen eines Datenpakets beim Durchlaufen der in Fig. 3 dargestellten herkömmlichen Taktsignalregenerationsschaltung erläutert.

Fig. 4a zeigt die räumliche Verteilung eines Datenpakets zu einem Zeitpunkt $t = t_o$, wobei hypothetisch angenommen ist, dieses Datenpaket habe den Zwischenverstärker unbeeinflußt durchlaufen. In Fig. 4b ist das durch den Zwischenverstärker veränderte Datenpaket ohne Rahmenregeneration dargestellt, während Fig. 4c das Datenpaket nach der Rahmenregeneration wiedergibt.

Das Datenpaket setzt sich jeweils aus dem Steuerinformations- und Nutzdatenteil 48a bzw. 48b und der Präambel 49a bzw. 49b zusammen. Die Einschaltverzögerung 50 besteht aus der Summe des Zeitverlusts, der durch den Synchronisierungsprozeß in der Taktableitungs- und Decodierungsstufe 32 entsteht, und der statischen Laufzeit 51. Der durch den Synchronisierungsprozeß hervorgerufene Zeitverlust beträgt beispielsweise beim elektronischen Baustein AM7992B mindestens vier Bitzeiten. Bei der Kombination dieses Bausteins AM7992B mit einem Zwischenspeicher von 7 Bits entsprechend dem erwähnten Baustein T7200 der Firma AT&T ergäbe sich eine Einschaltverzögerung 50 von ungefähr 1,1 $\mu$s. In einem Rechnernetzwerk nach der IEEE 802.3-Norm, bei der die maximale Laufzeit eines Datenpakets zwischen den beiden am weitesten voneinander entfernten Teilnehmern $T_i$ im Netzwerk 25,6 $\mu$s entspricht, wäre deshalb bei der Hintereinanderschaltung von 25,6/1,1 = 23 Zwischenverstärkern die zulässige Netzausdehnung auf O geschrumpft, wobei die zusätzlichen Laufzeitverzögerungen, die durch die einzelnen Schaltungsbauteile Decodierer (Teil der Taktableitungs- und Decodierstufe 32), Pufferspeicher 34 und Codierer 39 entstehen, unberücksichtigt geblieben sind.

Wie bereits erläutert, entstehen Präambelbitverluste 52. Auf Grund des Synchronisierungsprozesses bei der Taktsignalableitung werden einige Bits der Präambel, beispielsweise mindestens 4 Bits beim Baustein AM7992B, verbraucht. Bei einer Präambellänge von 56 Bits würden die Datenbits nach Durchlaufen von 14 Zwischenverstärkern keine Präambel mehr aufweisen.

Die Struktur der Präambel am Beginn eines Datenpakets ist eindeutig festgelegt. Es ist deshalb möglich, anstelle der empfangenen Präambel eine künstlich erzeugte auszusenden. Der Präambelgenerator 56 nimmt diese Aufgabe wahr und erzeugt eine synthetische Präambel.

Wird die Steuerschaltung 37 durch die Trägererkennungsstufe 55 vom Empfang eines Datenpakets unterrichtet, aktiviert sie nach einer wählbaren Wartezeit den Präambelgenerator 56 über die Leitung 58 und den Codierer 39 über die Leitung 38. Wird die Wartezeit klein oder praktisch Null gewählt, wird die synthetische Präambel bereits ausgesendet, bevor die Synchronisation für die Taktableitung abgeschlossen und der Pufferspeicher 34 ausreichend viele Bits gespeichert hat. Dies bedeutet, daß die Einschaltverzögerung sehr klein gehalten werden kann.

Ist seit dem Beginn des Auftretens eines einlaufenden Datenpakets eine genügend lange Zeit, die zum Auffüllen des Pufferspeichers 34 ausreicht, verstrichen, wird der Präambelgenerator 56 deaktiviert und der Pufferspeicher 34 freigegeben. Daher wird anstelle der synthetischen Präambel von diesem Zeitpunkt an die empfangene Präambel ausgesendet (vgl. Fig. 4c).

In Fig. 4c ist das durch die in Fig. 3 dargestellte Taktregenerationsschaltung veränderte Datenpaket nach der Rahmenregeneration wiedergegeben.

Aus dem Vergleich des unbeeinflußten (Fig. 4a) und des durch die bekannte Taktregenerationsschaltung veränderten Datenpakets (Fig. 4c) ergibt sich folgendes:

Da die Trägererkennungsstufe 55 den Beginn eines eingehenden Datenpakets sofort erkennt, kann in Abhängigkeit davon sofort ein synthetischer Präambelteil 61 ausgesendet werden, an den sich dann die Absendung des empfangenen Präambelteils 62 anschließt, wenn der Synchronisierungsvorgang in der Taktableitungs- und Decodierungsstufe 32 abgeschlossen ist.

Daraus ergibt sich, daß die Einschaltverzögerung, d. h. der Zeitraum zwischen dem Empfang des ersten Präambelbits und dem Wiederaussenden des ersten Präambelbits eines Datenpakets, klein ist. Die Präambel wird nicht verkürzt. Als weitere Konsequenz wird der Paketabstand bzw. das Inter Frame Gap zweier aufeinander folgender Datenpakete allerdings um die Differenz zwischen der Einschaltverzögerung und der statischen Laufzeit verringert.

Aus den erläuterten Eigenschaften des gemäß der Taktregenerationsschaltung von Fig. 5 veränderten Datenpakets lassen sich die an einen Zwischenverstärker gestellten Forderungen eines minimalen zeitlichen Abstands bzw. eines unveränderten Inter Frame Gaps, und die Forderung nach einer minimalen Laufzeit eines Datenpakets - wie weiter oben bereits erläutert wurde - gleichzeitig nicht erfüllen. Bei kleiner Einschaltverzögerung wird nämlich der Inter Frame Gap stark und bei großer Einschaltverzögerung gering verkürzt. Bei einer in der Praxis zu verwendenden Taktgenerationsschaltung wird aus diesem Grund ein Kompromiß zwischen beiden Forderungen eingegangen. Beim Baustein T7200 entspricht die Wartezeit zwischen dem Beginn des Datenempfangs und dem Aussenden der synthetischen Präambel, also die Einschaltverzögerung, der statischen Laufzeit, die durch die Anzahl der gepufferten Bits bestimmt ist. Dadurch wird der Inter Frame Gap verkleinert.

Wenn bei dieser bekannten Schaltungsanordnung, die in der auf dieselben Erfinder zurückgehenden DE 39 27 681-A1 beschrieben ist, zwei Datenpakete mit minimalem zeitlichem Abstand auf den Eingang des Zwischenverstärkers gelangen, können im ungünstigsten Fall beim Empfang des ersten Datenpakets in der Erkennungsschaltung einige Präambel-Bits verloren gehen, während beim zweiten, nachfolgenden Datenpaket, beispielsweise auf Grund einer größeren Signalamplitude, keine Präambelbits verloren gehen. Der Präambelgenerator 56 des Zwischenverstärkers fügt entsprechend Fig. 4c die fehlenden Präambelbits 61 dem ersten Datenpaket zu. Damit verzögert sich das Ende des Datenpakets um den Zeitraum 51. Da das zweite Datenpaket ohne Präambelbitverlust erkannt wird, reduziert sich die Pause zwischen den Datenpaketen um diesen Zeitraum 51, was im angelsächsischen Sprachgebrauch als Inter Frame Gap Shrink bezeichnet wird. Werden mehrere Zwischenverstärker in einem Netzwerk kaskadiert und treten für jeden Zwischenverstärker mehr oder weniger stark derartige Verkürzungen der Datenpaketpausen auf, verkürzen sich die Paketabstände also schrittweise, was zur Folge hat, daß aus diesem Grunde nur eine geringe Anzahl an kaskadierbaren Zwischenverstärkern möglich ist. Beim CSMA/CD-Verfahren nach der IEEE 802.3-Norm sind daher höchstens vier Zwischenverstärker kaskadierbar, da im ungünstigsten Falle neun Präambelbits pro Zwischenverstärker verloren gehen können und dies dann zu einer Reduktion der Datenpaketpause von 9,6 $\mu$s auf 6,0 $\mu$s führt.

Der Erfindung liegt daher die Aufgabe zugrunde, ein Verfahren zum Zwischenverstärken von digitalen Signalen anzugeben bzw. einen Zwischenverstärker für digitale Signale zu schaffen, das bzw. der Netzwerke mit einer größeren Zahl an kaskadierten Zwischenverstärkern ermöglicht.

Ausgehend von dem bekannten, zuvor beschriebenen Verfahren wird diese Aufgabe dadurch gelöst, daß die Pausen zwischen den Datenpaketen überprüft werden, und daß der Beginn der Aussendung des nachfolgenden Datenpakets verzögert wird, wenn eine verkürzte Datenpaketpause festgestellt wird.

Die erfindungsgemäße Maßnahme, bei Auftreten verkürzter Datenpaketpausen das nachfolgende Datenpaket verzögert auszusenden, bewirkt die Aufrechterhaltung eines minimalen zeitlichen Abstands zwischen den Datenpaketen. Dadurch ist die Begrenzung der Anzahl kaskadierter Zwischenverstärker in Datennetzwerken aufgehoben und es können größere räumliche Netzwerke konzipiert werden.

Vorteilhafte Ausgestaltungen der Erfindung sind in den Unteransprüchen angegeben.

Gemäß einer bevorzugten Ausgestaltung der Erfindung wird der Beginn der Aussendung des nachfolgenden Datenpakets wenigstens solange verzögert, bis sich eine minimale, vorgegebene Datenpaketpause zwischen aufeinanderfolgenden Datenpaketen ergibt. Dadurch wird die Aufrechterhaltung einer minimalen, vorgegebenen Datenpaketpause sichergestellt.

Vorzugsweise entspricht die maximale Verzögerung des Beginns der Aussendung des nachfolgenden Datenpakets der Zeitdauer, die der Zeitdauer für die Trägererkennung des vorausgegangenen Datenpakets entspricht. Auf diese Weise wird sichergestellt, daß die Zeit, die für die Erkennung des vorausgegangenen Datenpakets benötigt wird, die Datenpaketpause zwischen diesem Datenpaket und dem nachfolgenden Datenpaket nicht verkürzt.

Eine besonders vorteilhafte Ausgestaltung der Erfindung besteht darin, daß für die Überprüfung der Pausen zwischen den Datenpaketen eine Zeitfensterfunktion verwendet wird, wobei die Zeitfensterfunktion einerseits von der minimalen, vorgegebenen Datenpaketpause und andererseits von einem vorgegebenen, kleineren Zeitwert begrenzt ist. Auf Grund der Zeitfensterfunktion ist nach einem Datenpaket der zeitliche Bereich vorgegeben, indem die Aussendung eines neuen Datenpakets verhindert werden soll. Diese Ausführungsform ist aus folgendem Grunde besonders vorteilhaft. Wenn im Netzwerk Kollisionen auftreten, kann es zu kurzzeitigen Unterbrechungen innerhalb des Datenpakets kommen. Auf derartige Unterbrechungen darf der Paketpausen-Korrekturvorgang nicht reagieren. Um dies sicherzustellen, ist die Zeitfensterfunktion hinsichtlich eines kleineren Zeitwerts begrenzt.

Vorzugsweise wird in diesem Zusammenhang der Beginn der Aussendung des nachfolgenden Datenpakets auf die minimale, vorgegebene Datensignalpause verzögert, wenn der Anfang des nachfolgenden Datenpakets in der Zeitfensterfunktion liegt. Der Codierer beginnt daher erst nach der minimalen, vorgegebenen oder geforderten Datenpaketpause mit der Aussendung des nachfolgenden Datenpakets.

Ein Pufferspeicher zur Zwischenspeicherung weist vorzugsweise eine Speichertiefe auf, die größer oder gleich der Summe aus einer Speichertiefe zur Zwischenspeicherung auf Grund von Unterschieden zwischen dem Sende- und Empfangstakt und aus einer Speichertiefe zur Zwischenspeicherung auf Grund der Datenpaket-Pausenkorrektur ist. Dadurch ist eine fehlerfreie Funktion des Zwischenverstärkers auch mit Paketpausen-Korrektur sichergestellt.

Besonders vorteilhaft ist es, wenn das erfindungsgemäße Verfahren in Zusammenhang mit einem CSMA/CD-Zugriffsverfahren nach der IEEE 802.3-Norm verwendet wird. In diesem Falle beträgt die minimale Datenpaketpause vorzugsweise 9,6 $\mu$s. Bei CSMA/CD-Netzwerken nach der IEEE 802.3-Norm fällt daher die Begrenzung auf maximal vier Zwischenverstärker in Kaskadenschaltung, wie dies bisher der Fall war, weg.

Im Zusammenhang mit dem CSMA/CD-Zugriffsverfahren beträgt der vorgegebene, kleinere Zeitwert der Zeitfensterfunktion im wesentlichen 6,4 $\mu$s. Die Paketpausenkorrektur wird daher erst 6,4 $\mu$s nach Ende eines Datenpakets aktiviert, so daß das Verfahren bei Auftreten kurzzeitiger Unterbrechungen innerhalb des Datenpakets, etwa bei Kollisionen, nicht reagiert.

Im Zusammenhang mit dem CSMA/CD-Zugriffsverfahren ist es vorteilhaft, wenn der Pufferspeicher eine Speichertiefe von wenigstens 32 Bit aufweist. Mit dieser Bitanzahl ist die fehlerfreie Funktion des Zwischenverstärkers auch bei Einsatz der Paket-Pausenkorrektur sichergestellt.

Die gestellte Aufgabe wird weiterhin mit einem Zwischenverstärker der eingangs genannten Art gelöst, der erfindungsgemäß eine Paketpausen-Korrekturschaltung aufweist. Durch die zusätzliche, erfindungsgemäße Paketpausen-Korrekturschaltung werden die bereits im Zusammenhang mit den Merkmalen des erfindungsgemäßen Verfahrens beschriebenen Vorteile erreicht. Vorteilhafte Ausführungsformen des erfindungsgemäßen Zwischenverstärkers sind in den Unteransprüchen angegeben.

Durch die erfindungsgemäßen Maßnahmen bzw. Merkmalen kann insbesondere auch die minimal geforderte Datenpaketpause zwischen zwei Datenpaketen unter der Voraussetzung wieder hergestellt werden, daß die Signallaufzeit in einem Netzwerk dadurch nicht erhöht wird. Auch bei Kaskadierung von mehreren Zwischenverstärkern bleibt die Datenpaketpause immer erhalten. Auf diese Weise fällt die Begrenzung bei CSMA/CD-Netzwerken nach der IEEE 802.3-Norm hinsichtlich der Zahl der maximalen Zwischenverstärker (sie lag bei herkömmlichen Netzwerken dieser Art bei maximal vier Zwischenverstärkern) weg. Dieser Vorteil ist für Netzwerke mit optischen Übergungsstrecken und aktiver (elektrischer Verteilung der Daten) von besonderer Bedeutung. Für die optischen Übertragungsstrecken existiert die sogenannte FOIRL (Fiber Optic Inter Repeater Link)-Norm. Bei dieser Norm wird ein Leersignal, auch als IDLE-Signal bezeichnet, zur Leitungsüberwachung zwischen den Datenpaketen benutzt. Dieses IDLE-Signal ist asynchron zum Datenpaket und besitzt eine Frequenz von 1 MHz. Die Trägererkennung trennt die Datenpakete vom IDLE-Signal ab. Insbesondere durch die Asynchronität dieses IDLE-Signals gegenüber dem Datenpaket kommt es zu der bereits beschriebenen Unsicherheit hinsichtlich des Zeitpunkts, an dem die Trägererkennung erfolgt, so daß unterschiedliche Verzögerungszeiten von 0 bis 4 Bit auftreten können. Da mit den erfindungsgemäßen Maßnahmen und Merkmalen zur Pausenkorrektur die Begrenzung der Anzahl der Kaskadierungsstufen aufgehoben wird, ist die Ausdehnung eines Netzwerkes nur noch durch die Laufzeit im Medium und in den Komponenten der Verteiler und Zwischenverstärker bestimmt, jedoch nicht mehr durch die Anzahl der Zwischenverstärker.

Der Gegenstand der bereits erwähnten, und auf dieselben Erfinder zurückgehenden DE 39 27 681 betrifft ebenfalls ein Verfahren zur Zwischenverstärkung von digitalen Signalen sowie einen Zwischenverstärker. Die dort beschriebenen und beanspruchten Merkmale sind ebenfalls mit Vorteil im Zusammenhang mit den Maßnahmen und Merkmalen der vorliegenden Erfindung verwendbar. Um Wiederholungen zu vermeiden, wird insofern auf diese Druckschrift verwiesen.

Die vorliegende Erfindung wird anhand von Ausführungsbeispielen unter Bezug auf die Zeichnungen nachfolgend erläutert. Es zeigen:

Fig. 1      ein bekanntes CSMA/CD-Rechnernetz in schematischer Darstellung,

Fig. 2      in schematischer Darstellung wiedergegebene Signalverläufe zur Erläuterung des Jitter-Phänomens,

Fig. 3      eine schematische Darstellung einer Zwischenverstärker-Schaltungsanordnung nach dem Stand der Technik,

Fig. 4      schematische räumliche Darstellungen von Datenpaketen zur Erläuterung von Änderungen, die die Datenpakete durch den in Fig. 3 dargestellten Zwischenverstärker erfahren,

Fig. 5      ein weiteres schematisches Impulsdiagramm zur Erläuterung der eintretenden Datenpaket-Änderungen bei Durchlauf durch einen herkömmlichen Zwischenverstärker,

Fig. 6      ein erfindungsgemäßer Zwischenverstärker mit einer Paketpausen-Korrekturschaltung in schematischer Darstellung, und

Fig. 7      ein Ausführungsbeispiel für eine Paketpausen-Korrekturschaltung in schematischer Darstellung.

Die in Fig. 5 dargestellten Impulsdiagramme zeigen in schematischer Darstellung jeweils zwei aufeinanderfolgende Datenpakete, wobei Fig. 5a die Impulsform nach dem Aussenden vom Sender, Fig. 5b das Impulsdiagramm nach dem Empfang in einem Zwischenverstärker und Fig. 5c das Impulsdiagramm nach dem Wiederaussenden durch den Verstärker wiedergibt. Bei der schematischen Darstellung dieser Impulsdiagramme sind statistische Laufzeiten nicht berücksichtigt.

Wenn der Sender Datenpakete sendet, die jeweils aus dem Steuerinformations- und Nutzdatenteil 48 und der Präambel 49 bestehen, besteht zwischen dem vorlaufenden Datenpaket 71 und dem nachlaufenden Datenpaket 72 eine vorgegebene Datenpaketpause 73, die beim CSMA/CD-Verfahren 9,6 $\mu$s lang ist (vgl. Fig. 5a).

Wie bereits anhand von Fig. 4 beschrieben wurde, benötigt die Taktableitungs- und Decodierstufe 32 einen nicht vorhersagbaren, sich ständig ändernden Zeitraum zur Trägererkennung. Dies bedeutet, daß ein Teil der Präambel 49 beim Empfang im Zwischenverstärker verloren geht, was der auf diese Weise zustandekommenden Einschaltverzögerung 74 entspricht, wie dies in Fig. 5b schematisch wiedergegeben ist.

Wie anhand von Fig. 3 bereits beschrieben wurde, wird der auf Grund der Einschaltverzögerung 50 verlorengegangene Teil der Präambel 49 vom Präambelgenerator 56 durch Anhängen an den den Präambelrest wieder in seiner vollen Länge hergestellt, und danach schließt sich dann wieder der Steuerinformations- und Nutzdatenteil 48 in seiner vollen Länge an, wie dies in Fig. 5c schematisch dargestellt ist.

Ist nun die Einschaltverzögerung des nachfolgenden Datenpakets 72 kleiner als die Einschaltverzögerung des vorlaufenden Datenpakets 71 oder im extremsten Falle - wie dargestellt - gleich Null, verkürzt sich die Datenpaketpause 73, so daß sie kleiner als 9,6 $\mu$s wird. Diese Tatsache ergibt sich bildlich aus Fig. 5c.

Wiederholen sich aufeinanderfolgend derartige Verkürzungen der Datenpaketpausen, ist nach Durchlaufen einer Anzahl von kaskadierten Zwischenverstärkern die Pause verschwunden, was zur sicheren Übertragung in Netzen verhindert werden muß. Bei CSMA/CD-Netzwerken nach der IEEE 802.3-Norm können pro Zwischenverstärker 9 Präambelbits verloren gehen, so daß nur maximal vier Zwischenverstärker hintereinander geschaltet werden können. Insbesondere bei Netzwerken mit optischen Übertragungskanälen und aktiven Sternkopplern zur Signalverteilung ist jedoch sehr häufig eine höhere Anzahl hintereinander zu schaltender Zwischenverstärker erforderlich.

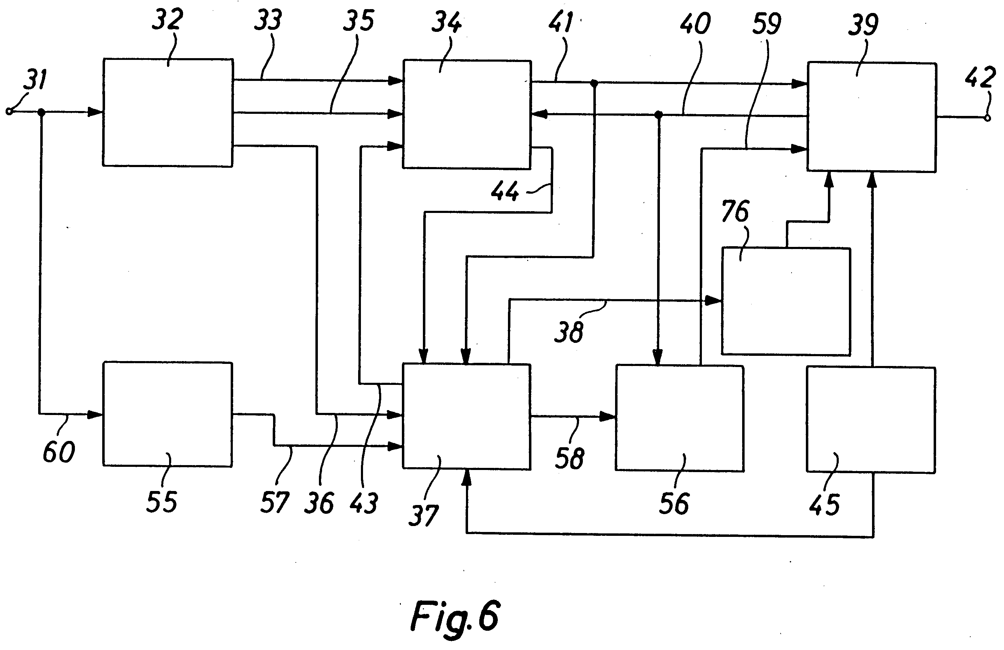

Fig. 6 zeigt eine Ausführungsform der erfindungsgemäßen Schaltungsanordnung, mit der sichergestellt wird, daß die Pause 73 zwischen aufeinanderfolgenden Datenpaketen auch bei unterschiedlichen Einschaltverzögerungen im Zwischenverstärker oder aus sonstigen Gründen nicht verkürzt wird. Schaltungsteile, die denen von Fig. 3 entsprechen, sind mit denselben Bezugszeichen versehen und werden nicht nochmals erläutert. Die Schaltungsanordnung gemäß Fig. 6 unterscheidet sich gegenüber derjenigen von Fig. 3 lediglich dadurch, daß in der Leitung 38, über die die Steuerschaltung 37 ein Signal zum Sperren des Auslesens des Pufferspeichers 34 durch den Codierer 39 bereitstellt, eine Datenpaketpausen-Korrekturschaltung 76 vorgesehen ist. Diese Datenpaketpausen-Korrekturschaltung 76 überprüft die Paketpausen der Sendedatenpakete und korrigiert den geforderten Wert der Paketpausen, - beim CSMA/CD-Verfahren nach der IEEE 802.3-Norm beträgt diese Datenpaketpause 9,6 $\mu$s -, bei Bedarf. Die Datenpaketpausen-Korrekturschaltung 76 erkennt also, wenn die Sendefreigabe für das nachfolgende Datenpaket zu früh erfolgt, um die vorgegebene Datenpaketpause einzuhalten und verzögert in diesem Falle die Freigabe bis zum Erreichen der minimalen Datenpaketpausen-Zeit.

Dieser Vorgang ist insbesondere bei Anwendung des CSMA/CD-Übertragungsverfahrens zulässig, da die Laufzeit der Daten zum Zielteilnehmer für den schlechtesten Fall berechnet werden muß. Dies bedeutet, daß die Laufzeit für einen Zwischenverstärker aus der statischen Laufzeit, das ist die Zeit zum Zwischenspeichern im Pufferspeicher 34 und dem ungünstigsten Wert für die Trägererkennung zu bestimmen ist. Erfolgt für das nachfolgende Datenpaket die Trägererkennung mit keiner oder nur geringer Verzögerung, wie dies bereits ausgeführt wurde, so darf das Aussenden dieses Datenpakets um den Zeitwert verzögert werden, den die Trägererkennung maximal benötigt. Auf diese Weise ist die minimal geforderte Datenpaketpause zwischen zwei Datenpaketen wieder hergestellt, ohne daß sich die Signallaufzeit im Netzwerk erhöht. Auch bei Kaskadierung von mehreren Zwischenverstärkern bleibt dabei die Pause erhalten.

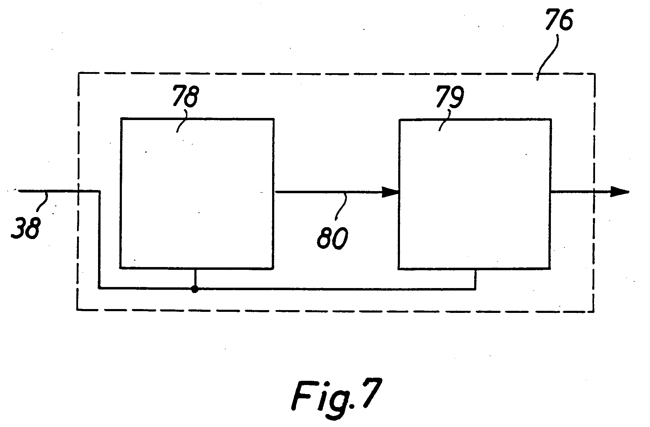

Fig. 7 zeigt ein schematisches Blockschaltbild für eine Ausführungsform der Datenpaketpausen-Korrekturschaltung 76. Sie umfaßt eine Zeitfenster-Funktionsstufe 78 sowie eine Freigabeverzögerungsstufe 79.

Der Zeitfenster-Funktionsstufe 78 und der Freigabeverzögerungsstufe 79 wird ein Freigabesignal bereitgestellt, das die Steuerschaltung 37 (vgl. Fig. 5) bereitstellt. Die Zeitfensterfunktionsstufe 78 prüft die Pausenlänge zwischen den Datenpaketen und gibt an die Freigabeverzögerungsschaltung 79 über die Leitung 80 ein Verzögerungssignal ab, welches bewirkt, daß die Verzögerungsfreigabestufe 79 den Beginn des Aussendens des nachfolgenden Datenpakets verzögert, nämlich dadurch, daß das am Ausgang der Verzögerungsfreigabestufe 79 bereitgestellte Freigabesignal an den Codierer 39 zeitlich entsprechend verzögert wird.

Vorteilhaft ist die Verwendung eines Zeitfensterbereichs, der den Zeitraum nach einem Datenpaket festlegt, in dem die Aussendung eines neuen Datenpaketes verhindert werden soll. Oder anders ausgedrückt, fällt der Anfang des folgenden Datenpakets in diesen vorgegebenen Zeitfensterbereich, so wird die Freigabe von der Steuerlogik auf die minimale Datenpaketpause verzögert. Das bedeutet, daß der Codierer 39 erst nach der minimalen, geforderten Datenpaketpause mit der Aussendung des Datenpakets beginnt.

Bei Verwendung der erfindungsgemäßen Schaltungsanordnung im Zusammenhang mit dem CSMA/CD-Übertragungsverfahren nach der IEEE 802.3-Norm wird diese Zeitfensterfunktion mit den Zeitwerten 6,4 $\mu$s und 9,6 $\mu$s vorgegeben. Fällt also der Anfang des folgenden Datenpakets in diesen Zeitrahmen, erfolgt eine Verzögerung der Aussendung auf 9,6 $\mu$s. Die Abgrenzung der Zeitfensterfunktion auf einen Wert, der größer O ist bewirkt, daß die Überprüfung der Datenpaketpausen erst um diesen Zeitraum - im vorliegenden Fall um 6,4 $\mu$s - versetzt nach Ende eines Datenrahmens aktiviert wird. Dadurch wird vermieden, daß kurzzeitige Unterbrechungen, die innerhalb eines Datenpakets, beispielsweise bei einer Kollision, auftreten können, den Vorgang der Datenpaket-Pausenkorrektur beeinflussen können.

**Patentansprüche**

1. Verfahren zum Zwischenverstärken von digitalen Signalen mit
   - einer eine Zwischenspeicherung der digitalen Signale umfassenden Amplituden- und Taktregeneration, und
   - einem Ausgleich der durch die Taktableitung auftretenden Längenverluste der Präambel,

   dadurch **gekennzeichnet,** daß
   - die Pausen zwischen den Datenpaketen überprüft werden und
   - der Beginn der Aussendung des nachfolgenden Datenpakets verzögert wird, wenn eine verkürzte Datenpaketpause festgestellt wird.

2. Verfahren nach Anspruch 1, dadurch gekennzeichnet, daß der Beginn der Aussendung des nachfolgenden Datenpakets wenigstens solange verzögert wird, bis sich eine minimale, vorgegebene Datenpaketpause zwischen aufeinanderfolgenden Datenpaketen ergibt.

**3.** Verfahren nach Anspruch 1 oder 2, dadurch gekennzeichnet, daß die maximale Verzögerung des Beginns der Aussendung des nachfolgenden Datenpakets der Zeitdauer für die Trägererkennung des vorangegangenen Datenpakets entspricht.

**4.** Verfahren nach einem der vorhergehenden Ansprüche, dadurch gekennzeichnet, daß für die Überprüfung der Pausen zwischen den Datenpaketen eine Zeitfensterfunktion verwendet wird.

**5.** Verfahren nach einem der vorhergehenden Ansprüche, dadurch gekennzeichnet, daß die Zeitfensterfunktion einerseits von der minimalen Datenpaketpause und andererseits von einem vorgegebenen, kleineren Zeitwert begrenzt ist.

**6.** Verfahren nach einem der vorhergehenden Ansprüche, dadurch gekennzeichnet, daß der Beginn der Aussendung des nachfolgenden Datenpakets auf die minimale Datensignalpause verzögert wird, wenn der Anfang des nachfolgenden Datenpakets in der Zeitfensterfunktion liegt.

**7.** Verfahren nach einem der vorhergehenden Ansprüche, dadurch gekennzeichnet, daß ein Pufferspeicher zur Zwischenspeicherung eine Speichertiefe aufweist, die größer oder gleich der Summe aus einer Speichertiefe zur Zwischenspeicherung auf Grund von Unterschieden zwischen dem Sende- und Empfangstakt, und aus einer Speichertiefe zur Zwischenspeicherung auf Grund der Datenpaket-Pausenkorrektur ist.

**8.** Verfahren nach einem der vorhergehenden Ansprüche, dadurch gekennzeichnet, daß das Verfahren im Zusammenhang mit einem CSMA/CD-Zugriffsverfahren nach der IEEE 802.3-Norm verwendet wird.

**9.** Verfahren nach Anspruch 8, dadurch gekennzeichnet, daß die minimale Datenpaketpause 9,6 $\mu$s beträgt.

**10.** Verfahren nach Anspruch 8 oder 9, dadurch gekennzeichnet, daß der vorgegebene, kleinere Zeitwert der Zeitfensterfunktion 6,4 $\mu$s beträgt.

**11.** Verfahren nach einem der Ansprüche 8 bis 10, dadurch gekennzeichnet, daß der Pufferspeicher eine Speichertiefe von wenigstens 32 Bits aufweist.

**12.** Zwischenverstärker mit
- einer Amplituden- und Taktregenerationsschaltung und
- einem Präambelgenerator (56),
gekennzeichnet durch eine Paketpausen-Korrekturschaltung (76).

**13.** Zwischenverstärker nach Anspruch 12, dadurch gekennzeichnet, daß die Paketpausen-Korrekturschaltung (76) eine Zeitfenster-Funktionsstufe (78) und eine Freigabeverzögerungsstufe (79) umfaßt.

**14.** Zwischenverstärker nach Anspruch 12 oder 13, dadurch gekennzeichnet, daß das Zeitfenster der Zeitfenster-Funktionsstufe (78) durch eine vorgegebene, minimale Datenpaketpause nach oben und durch einen Zeitwert größer Null begrenzt ist.

**15.** Zwischenverstärker nach einem der vorhergehenden Ansprüche, dadurch gekennzeichnet, daß bei Verwendung des CSMA/CD-Zugriffsverfahrens nach der IEEE 802.3-Norm das Zeitfenster durch in dem Zeitwert 9,6 $\mu$s nach oben und 6,4 $\mu$s nach unten begrenzt ist.

Fig.1

2a)

2b)

2c)

Fig.2

Fig.3

EP 0 502 251 A2

Fig.4

Fig.5

Fig.6

Fig.7